# EUROPÄISCHE PATENTSCHRIFT

(11) **EP 2 155 508 B1**
(45) Veröffentlichungstag und Bekanntmachung des Hinweises auf die Patenterteilung: **22.01.2014**
(21) Anmeldenummer: 08749006.6
(22) Anmeldetag: 19.04.2008
(51) Int. Cl.: B60G 7/02, B60G 21/05

(54) **HINTERACHSE FÜR EIN KRAFTFAHRZEUG**
REAR AXLE FOR A MOTOR VEHICLE
ESSIEU ARRIÈRE POUR VÉHICULE À MOTEUR

(30) Priorität: 12.05.2007 DE 102007022283
(43) Veröffentlichungstag der Anmeldung: 24.02.2010
(73) Patentinhaber: Volkswagen Aktiengesellschaft, 38440 Wolfsburg (DE)
(72) Erfinder: WINTER, Ingo, 38550 Isenbüttel (DE)
(86) Internationale Anmeldenummer: PCT/EP2008/003166
(87) Internationale Veröffentlichungsnummer: WO 2008/138451

(56) Entgegenhaltungen:
- EP-A- 0 083 217
- EP-A- 0 389 363
- EP-B- 0 458 665
- AT-B- 386 806
- FR-A- 2 317 115

## Beschreibung

Die Erfindung bezieht sich auf eine Hinterachse für ein Kraftfahrzeug, umfassend zwei Längslenker, die jeweils schwenkbar an einem Fahrzeugaufbau angelenkt sind, einen Querträger, der die Längslenker in Fahrzeugquerrichtung miteinander verbindet und an die Längslenker jeweils starr angekoppelt ist, und einen sich im wesentlichen in Fahrzeugquerrichtung erstreckenden Panhardstab, der mit einem Ende an einem Längslenker oder dem Querträger und mit einem weiteren Ende an einem aufbauseitigen Anlenkpunkt angelenkt ist.

An Kraftfahrzeugen, deren Aufbau für eine Vierlenkerhinterachse ausgelegt ist, lassen sich aus räumlichen Gründen eine herkömmliche Verbundlenkerachse oder eine Hinterachse mit einem Panhardstab gemäß der EP 0 458 665 B1 ohne aufwändige Änderungen des Hinterwagens nicht mehr einbauen. Vierlenkerhinterachsen sind jedoch sehr aufwändig und damit teuer.

Vor diesem Hintergrund liegt der Erfindung die Aufgabe zugrunde, eine kostengünstige Hinterachse zu schaffen, die sich ohne großen Modifikationsaufwand auf Seiten des Fahrzeugaufbaus in ein für eine Vierlenkerhinterachse ausgelegtes Fahrzeug einbauen lässt.

Diese Aufgabe wird durch eine Hinterachse gemäß Patentanspruch 1 gelöst. Die erfindungsgemäße Hinterachse umfasst zwei Längslenker, die jeweils schwenkbar an einem Fahrzeugaufbau angelenkt sind, einen Querträger, der die Längslenker in Fahrzeugquerrichtung miteinander verbindet und an die Längslenker jeweils starr angekoppelt ist, und einen sich im wesentlichen in Fahrzeugquerrichtung erstreckenden Panhardstab, der mit einem Ende an einem Längslenker oder dem Querträger und mit einem weiteren Ende an einem aufbauseitigen Anlenkpunkt angelenkt ist. Die erfindungsgemäße Hinterachse umfasst ferner eine sich im wesentlichen in Fahrzeuglängsrichtung erstreckende Längsstrebe, die mit einem vorderen Endabschnitt starr mit dem Fahrzeugaufbau verbunden ist und an einem freien hinteren Endabschnitt den aufbauseitigen Anlenkpunkt für den Panhardstab ausbildet. Hierdurch wird eine preiswerte und leichte Hinterachse geschaffen, deren Bauraumbedarf einer Vierlenkerhinterachse entspricht. Die erfindungsgemäße Hinterachse kann so alternativ in Fahrzeuge eingebaut werden, deren Aufbau für eine Vierlenkerhinterachse ausgelegt ist. Hierbei sind allenfalls sehr geringe Änderungen am Hinterwagen des Fahrzeugs erforderlich.

Weitere, vorteilhafte Ausgestaltungen der Erfindung sind in den Patentansprüchen angegeben.

Vorzugsweise ist zusätzlich eine Querstrebe vorgesehen, die sich im wesentlichen in Fahrzeugquerrichtung erstreckt, mit einem ersten Endabschnitt mit dem Fahrzeugaufbau verbunden ist und mit einem weiteren, freien Endabschnitt mit dem aufbauseitigen Ende des Panhardstabs und/oder dem freien Ende des Längsträgers gekoppelt ist. Hierdurch wird eine stabile Kraftaufnahme sowohl in Fahrzeuglängsrichtung als auch in Fahrzeugquerrichtung gewährleistet.

Gemäß einer vorteilhaften Ausgestaltung ist der Panhardstab an einer Oberseite des freien hinteren Endabschnitts der Längsstrebe angelenkt.

Ferner kann der Panhardstab an einer Unterseite des freien Endabschnitts der Querstrebe angelenkt sein.

Bevorzugt ist der Panhardstab über ein Gelenk mit einer stehenden Lagerachse aufbauseitig angelenkt. Dieses Gelenk kann zwischen dem Endabschnitt der Längsstrebe und dem Endabschnitt der Querstrebe angeordnet sein.

Gemäß einer weiteren, vorteilhaften Ausgestaltung ist ein Lagerzapfen des aufbauseitigen Panhardstabgelenks sowohl an der Längsstrebe als auch an der Querstrebe abgestützt.

Im Hinblick auf die gewünschte Einbausituation ist der aufbauseitige Anlenkpunkt des Panhardstabs bezogen auf die Fahrzeuglängsrichtung und/oder bezogen auf die Fahrzeughochrichtung zwischen einander gegenüberliegenden, an den Längslenkern und/oder dem Querlenker befestigten Radträgern angeordnet. Im Vergleich zu der in der EP 0 458 665 B1 beschriebenen Hinterachskonfiguration liegt der aufbauseitige Anlenkpunkt des Panhardstabs somit erheblich weiter hinten.

In diesem Zusammenhang ist ferner vorteilhaft, wenn die Querstrebe zwischen ihren Endabschnitten einen bezogen auf die Fahrzeughochrichtung nach unten abgesetzten Mittelabschnitt aufweist.

Entsprechend kann auch der Querträger des Achskörpers zwischen den Längslenkern einen Mittelabschnitt mit einer bezogen auf die Fahrzeughochrichtung nach unten abgesetzten Oberkante ausgeführt werden. Hierdurch kann der Fahrzeugboden im Bereich zwischen den Hinterrädern verhältnismäßig weit unten, das heißt nahe zur Fahrbahn angeordnet werden.

Vorzugsweise weist der Querträger ein U-Profil mit zwei Seitenwangen und einem Verbindungssteg auf. Dabei besitzen die Seitenwangen im Mittelabschnitt eine verringerte Höhe.

Weiterhin können die Unterkanten der Seitenwangen des Querträgers so angeordnet werden, dass diese in einer horizontalen Ebene liegen, wenn sich die Achse in einer oberen Endanschlagstellung befindet.

Gemäß einer weiteren, vorteilhaften Ausgestaltung der Erfindung ist jeweils ein Radträger an einem Längslenker befestigt, wobei jeweils zwischen einem Radträger und einem Längslenker eine Lageraufnahme für einen Schwingungsdämpfer gebildet wird. Hierdurch lässt sich mit geringen Umformgraden eine zweiseitige Lageraufnahme für einen Schwingungsdämpfer bereitstellen.

Gemäß einer weiteren, vorteilhaften Ausgestaltung ist ein Achszapfen an dem Radträger befestigt ist. Die Befestigung erfolgt vorzugsweise durch Reibschweißen. Hierdurch lassen sich mit geringem Aufwand sehr genaue Vorspur- und Sturzwerte einstellen.

Bevorzugten wird zunächst ein Achskörper aus den Längslenkern und dem Querträger einschließlich der Radträger zusammengefügt. Anschließend können dann die Achszapfen an dem so gebildeten Achskörper ausgerichtet und an den Radträgern befestigt werden.

Nachfolgend wird die Erfindung anhand eines in der Zeichnung dargestellten Ausführungsbeispiels näher erläutert. Die Zeichnung zeigt in:
- Figur 1: eine Ansicht eines Ausführungsbeispiels einer Hinterachse nach der Erfindung,
- Figur 2: eine weitere Ansicht der Hinterachse aus Figur 1,
- Figur 3: eine Schnittansicht entlang der Linie III-III in Figur 2 ohne Darstellung des Panhardstabs, und in
- Figur 4: eine räumliche Detailansicht des Bereichs eines Radträgers vor einer Befestigung eines Achszapfens an diesem.

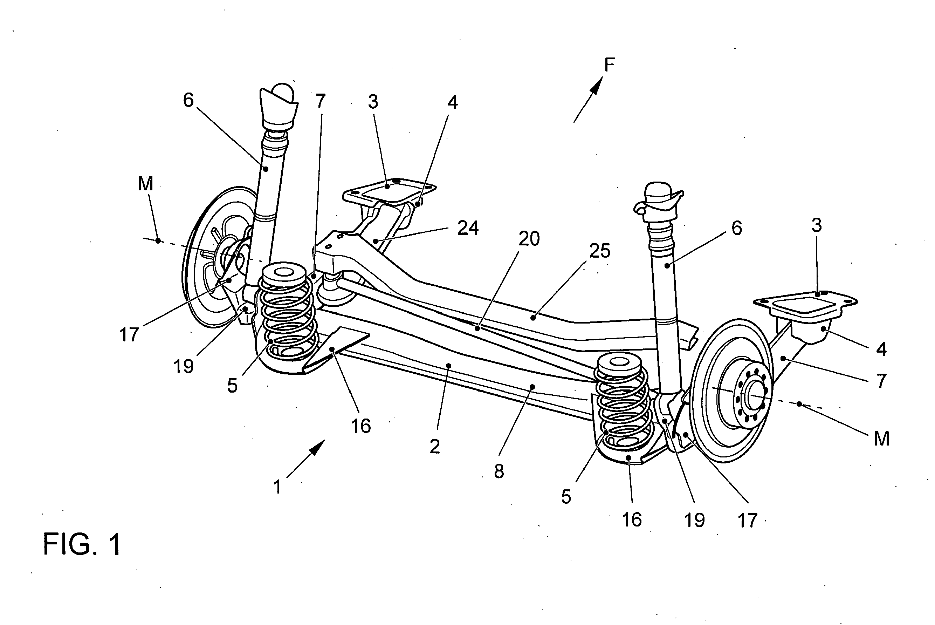

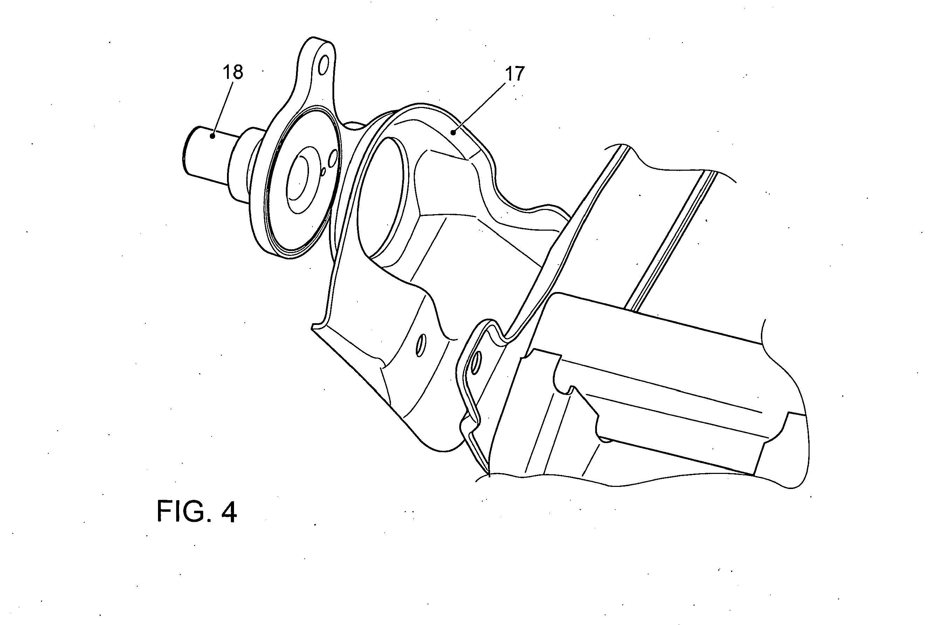

Das in den Figuren 1 bis 4 dargestellte Ausführungsbeispiel zeigt eine Hinterachse 1 für ein Personenkraftfahrzeug.

Die Hinterachse 1 umfasst einen Achskörper 2 zur Abstützung von zwei nicht näher dargestellten Fahrzeugrädern. Der Achskörper 2 ist um eine im Wesentlichen horizontale Achse schwenkbar an einem ebenfalls nicht näher dargestellten Fahrzeugaufbau angelenkt. Figur 1 zeigt lediglich die aufbauseitigen Konsolen 3 mit den entsprechenden Lagerstellen 4.

Weiterhin ist der Achskörpers 2 in Fahrzeughochrichtung über zwei Schraubenfedern 5 am Fahrzeugaufbau abgestützt. Anstelle der dargestellten Schraubenfedern 5 können auch andere Federtypen verwendet werden. Zwischen dem Fahrzeugaufbau und dem Achskörper 2 sind zwei Schwingungsdämpfer 6 eingegliedert, welche bezogen auf die Vorwärtsfahrtrichtung F jeweils etwas hinter den Radmitten M am Achskörper 2 abgestützt sind.

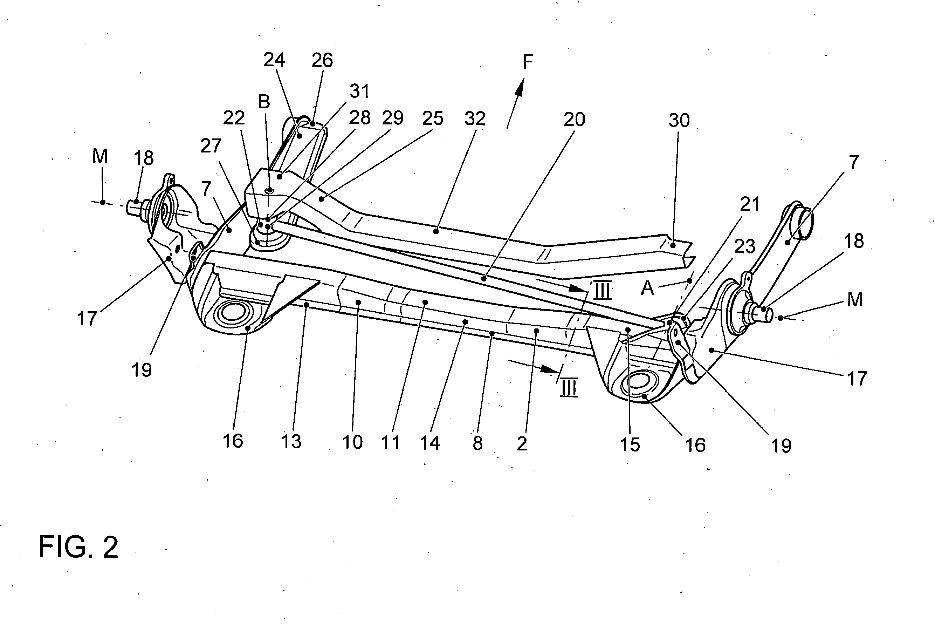

Der Achskörper 2 umfasst zwei Längslenker 7 sowie einen diese verbindenden Querträger 8. Jeder Längslenker 7 ist mit einem vorderen Ende schwenkbar an einer Konsole 3 gelagert, während der Querträger 8 an einem hinteren Endabschnitt starr angekoppelt ist. Der in Fahrzeugquerrichtung verlaufende Querträger 8 ist hierbei biegesteif, jedoch torsionsweich ausgeführt. Wie Figur 2 zeigt, ist der Querträger 8 hinter den Radmitten M an den Längslenkern 7 befestigt, vorzugsweise angeschweißt.

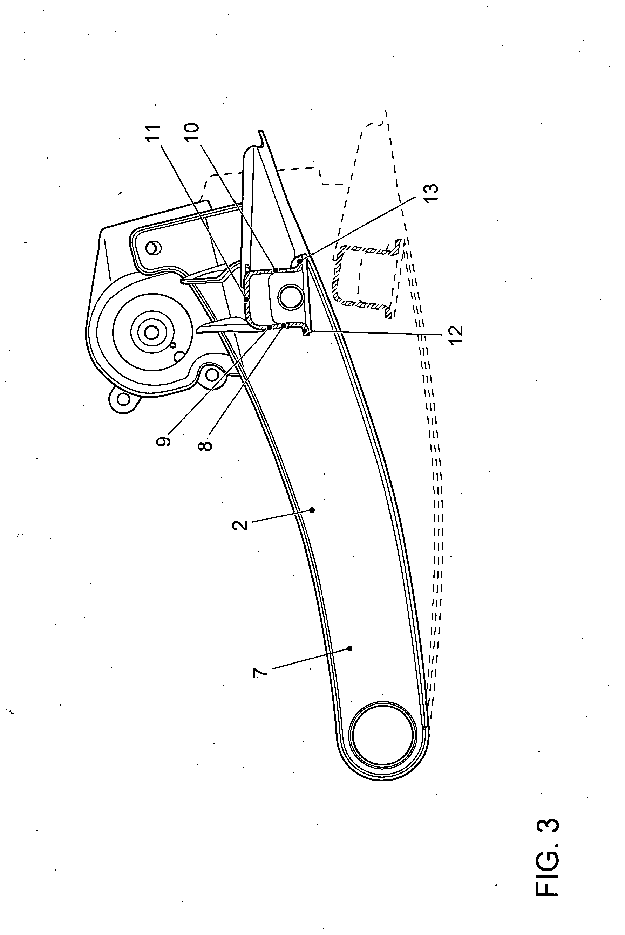

Bei dem dargestellten Ausführungsbeispiel ist der Querträger 8 ein Blechumformteil mit einem U-förmigen Profilquerschnitt, der wie in Figur 3 gezeigt, durch zwei Seitenwangen 9 und 10 und einen diese verbindenden Verbindungssteg 11 gebildet wird. Der Verbindungssteg 11 definiert gleichzeitig die Oberkante des nach unten offenen Querträgers 8. Befindet sich die Hinterachse 1 in einer oberen Anschlagstellung, das heißt in einem Zustand maximaler Einfederung, so befindet sich der U-förmige Profilquerschnitt in einer im wesentlichen waagerechten Position, in der die Unterkanten 12 und 13 der Seitenwangen 9 und 10 des Querträgers 8 in einer horizontalen Ebene liegen. In Normallage, das heißt bei leerem Fahrzeug ist die Unterseite des Querträgers 8 dementsprechend in Vorwärtsfahrtrichtung F leicht geöffnet.

Wie Figur 2 weiter zeigt, weist der Querträger 8 zwischen den Längslenkern 7 einen Mittelabschnitt 14 mit einer bezogen auf die Fahrzeughochrichtung nach unten abgesetzten Oberkante aufweist. Dazu ist das U-Profil in dem Mittelabschnitt 14 mit einer verringerten Profilhöhe ausgeführt. Die Seitenwangen 9 und 19 weisen im Mittelabschnitt 14 im Vergleich zu den Endabschnitten 15 eine verringerte Höhe auf.

An den Querträger 8 sind zwei Federteller 16 angeschweißt, die nach hinten, das heißt entgegen der Vorwärtsfahrtrichtung F von dem Querträger 8 abstehen und die Federn 5 abstützen. Die Federteller 16, die sich an den Endabschnitten 15 befinden, können hierbei zusätzlich jeweils an einem Längslenker 7 abgestützt und mit diesem beispielsweise durch Schweißen verbunden sein, um die Anbindung des Querträgers 8 an dem jeweiligen Längslenker 7 auszusteifen. Die Längslenker 7 erstrecken sich hierzu nach hinten etwas über den Querträger 8 hinaus.

Im Bereich der Anbindung des Querträgers 8 an den Längslenkern 7 weist der Achskörper 2 weiterhin zwei Radträger 17 auf. Die Radträger 17, die ebenfalls als Blechumformteile ausgebildet sind, sind jeweils außenseitig an die Längslenker 7 angesetzt und mit dem jeweiligen Längslenker 7 verbunden, vorzugsweise verschweißt.

An den Radträgern 17 ist jeweils ein Achszapfen 18 vorgesehen, der bei dem hier dargestellten Ausführungsbeispiel eigens an dem Radträger 17 befestigt ist. Bei der Montage wird zunächst der Achskörper 2 aus den Längslenkern 7, dem Querträger 8 und den Radträgern 17 zusammengefügt. Erst anschließend werden die Achszapfen 18 befestigt. Diese werden vorher zu dem Achskörper 2 ausgerichtet. Hierdurch lassen sich Vorspur- und Sturzwerte mit geringem Aufwand sehr genau einstellen. Die Befestigung erfolgt vorzugsweise durch Reibschweißen.

Zwischen jeweils einem Radträger 17 und einem Längslenker 7 wird eine vorzugsweise hinter der Radmitte M liegende Lageraufnahme 19 für einen Schwingungsdämpfer 6 gebildet. Hierzu kann an dem Längsträger 7 eine nach oben abstehende Lasche ausgeformt werden, die mit einer Durchstecköffnung für einen Lagerzapfen oder einen Befestigungsbolzen versehen ist und mit einer entsprechenden Öffnung an dem Radträger 17 fluchtet.

Zur Abstützung von Querkräften ist ein Panhardstab 20 zwischen dem Achskörper 2 und dem Fahrzeugaufbau vorgesehen. Der Panhardstab 20 erstreckt sich im Wesentlichen in Fahrzeugquerrichtung und ist mit einem Ende 21 am Querträger 8 und mit einem weiteren Ende 22 an einem aufbauseitigen Anlenkpunkt angelenkt.

Zur Anlenkung am Achskörper 2 ist auf der Oberseite des Querträgers 8 eine Konsole 23 vorgesehen, die vorzugsweise so angeordnet ist, dass die Anbindung des Panhardstabs hinter der Radmitte M erfolgt. Die Schwenkachse A des mit der Konsole 23 gebildeten Gelenks erstreckt sich im Wesentlichen in Fahrzeuglängsrichtung. Prinzipiell kann die Konsole 23 integral mit dem Querträger 8 oder einem Federteller 16 ausgebildet werden. Bei dem dargestellten Ausführungsbeispiel sind hierzu jedoch eines oder mehrere separate Blechelemente an dem Querträger 8 befestigt bzw. an diesen angeschweißt. Es ist jedoch auch möglich, das achsseitige Ende 21 des Panhardstabs 20 an einen Längslenker 7 anzukoppeln.

Das aufbauseitige Ende 22 des Panhardstabs 20 ist nicht unmittelbar am Fahrzeugaufbau, sondern an eigens an diesem befestigten Streben angelenkt. Prinzipiell ist dies über eine einzige Strebe möglich. Bei dem in den Figuren 1 und 2 dargestellten Ausführungsbeispiel kommen jedoch eine Längsstrebe 24 und eine Querstrebe 25 zum Einsatz.

Die sich im wesentlichen in Fahrzeuglängsrichtung erstreckende Längsstrebe 24 ist mit einem vorderen Endabschnitt 26 starr mit dem Fahrzeugaufbau verbunden, während ein freier hinterer Endabschnitt 27 den aufbauseitigen Anlenkpunkt für den Panhardstab 20 ausbildet. Die Längsstrebe 24 ist bezogen auf die Fahrzeuglängsrichtung in etwa auf Höhe der aufbauseitigen Anbindung des Achskörpers 2 am Fahrzeugaufbau befestigt und verläuft unter dem Fahrzeugboden innenseitig des unmittelbar benachbarten Längslenkers 7 nach hinten. Der Panhardstab 20 erstreckt sich über die Längsstrebe 24 und ist vorzugsweise an einer Oberseite des freien hinteren Endabschnitts 26 der Längsstrebe 24 angelenkt. Das entsprechende Gelenk 28 ist in einer Buchse 29 am Ende 22 des Panhardstabs 20 angeordnet und weist eine stehende, das heißt eine sich im Wesentlichen in Fahrzeughochrichtung erstreckende Lagerachse B auf.

Die sich im wesentlichen in Fahrzeugquerrichtung erstreckende Querstrebe 25 ist mit einem ersten Endabschnitt 30 mit dem Fahrzeugaufbau verbunden und mit einem weiteren, freien Endabschnitt 31 mit dem aufbauseitigen Ende 22 des Panhardstabs 20 gekoppelt. Die Befestigung am Fahrzeugaufbau erfolgt hierbei im Bereich eines Fahrzeugrads. Dementsprechend weist die Querstrebe 25 zur Fahrzeugquerrichtung einen sehr geringen Anstellwinkel von 0° bis maximal etwa 5° auf.

Bei dem dargestellten Ausführungsbeispiel ist der Panhardstab 20 an einer Unterseite des freien Endabschnitts 31 der Querstrebe 25 angelenkt, so dass das aufbauseitige Ende 22 des Panhardstabs 20 zwischen der Längsstrebe 24 und der Querstrebe 25 aufgenommen ist. Ein Lagerzapfen des Gelenks 28 ist entsprechend sowohl an der Längsstrebe 24 als auch an der Querstrebe 25 abgestützt.

Es ist jedoch auch möglich, die Längsstrebe 24 und die Querstrebe 25 unmittelbar miteinander zu verbinden und den Panhardstab 20 an einer dieser Streben anzukoppeln.

Der durch die Längsstrebe 24 und die Querstrebe 25 gebildete aufbauseitige Anlenkpunkt des Panhardstabs 20 liegt bezogen auf die Fahrzeuglängsrichtung sowie bezogen auf die Fahrzeughochrichtung jeweils zwischen den einander gegenüberliegenden Radträgern 17.

Wie in den Figuren 1 und 2 gezeigt, kann die Querstrebe 25 bei Betrachtung von oben geköpft ausgeführt werden, so dass der Panhardstab 20 bezogen auf die Fahrzeuglängsrichtung hinter dieser vorbeigeführt werden kann.

Weiterhin weist die unter dem Fahrzeugboden verlaufende Querstrebe 25 zwischen ihren Endabschnitten 30 und 31 einen bezogen auf die Fahrzeughochrichtung nach unten abgesetzten Mittelabschnitt 32 auf.

Die vorstehend erläuterte Hinterachse 1 besitzt einen Bauraumbedarf, der einer Vierlenkerhinterachse entspricht. Hierdurch kann die beschriebene Hinterachse alternativ zu einer solchen Vierlenkerhinterachse an einem Fahrzeug verbaut werden, ohne dass hierfür größere Modifikationen am Fahrzeugaufbau erforderlich wären, die für herkömmliche Verbundlenkerachsen und dergleichen vorgenommen werden müssten. Im Vergleich zu einer Vierlenkerhinterachse ergibt sich ein deutlich verminderter Fertigungs- und Montageaufwand, wodurch die erfindungsgemäße Hinterachse 1 eine merkliche Kostensenkung ermöglicht.

Die Erfindung wurde vorstehend anhand eines Ausführungsbeispiels näher erläutert. Sie ist jedoch nicht auf das Ausführungsbeispiel beschränkt, sondern umfasst alle durch die Patentansprüche definierten Ausgestaltungen.

### Bezugszeichenliste

- 1: Hinterachse
- 2: Achskörper
- 3: Konsole
- 4: Lager
- 5: Schraubenfeder
- 6: Schwingungsdämpfer
- 7: Längslenker
- 8: Querträger
- 9: vordere Seitenwange
- 10: hintere Seitenwange
- 11: Verbindungssteg
- 12: vordere Unterkante
- 13: hintere Unterkante
- 14: Mittelabschnitt des Querträgers
- 15: Endabschnitt des Querträgers
- 16: Federteller
- 17: Radträger
- 18: Achszapfen
- 19: Lageraufnahme
- 20: Panhardstab
- 21: achsseitiges Ende des Panhardstabs
- 22: aufbauseitiges Ende des Panhardstabs
- 23: Konsole
- 24: Längsstrebe
- 25: Querstrebe
- 26: vorderer Endabschnitt der Längsstrebe
- 27: hinterer Endabschnitt der Längsstrebe
- 28: Gelenk
- 29: Buchse
- 30: aufbauseitiger Endabschnitt der Querstrebe
- 31: freier Endabschnitt der Querstrebe
- 32: Mittelabschnitt der Querstrebe
- A: Schwenkachse des achsseitigen Lagers des Panhardstabs
- B: Schwenkachse des aufbauseitigen Lagers des Panhardstabs
- F: Vorwärtsfahrtrichtung
- M: Radmitte

## Patentansprüche

1. Hinterachse für ein Kraftfahrzeug, umfassend:
zwei Längslenker (7), die jeweils schwenkbar an einem Fahrzeugaufbau angelenkt sind, einen Querträger (8), der die Längslenker (7) in Fahrzeugquerrichtung miteinander verbindet und an die Längslenker (7) jeweils starr angekoppelt ist, und
einen sich im Wesentlichen in Fahrzeugquerrichtung erstreckenden Panhardstab (20), der mit einem Ende (21) an einem Längslenker (7) oder dem Querträger (8) und mit einem weiteren Ende (22) an einem aufbauseitigen Anlenkpunkt angelenkt ist,
**gekennzeichnet durch**
eine sich im wesentlichen in Fahrzeuglängsrichtung erstreckenden Längsstrebe (24), die mit einem vorderen Endabschnitt (26) starr mit dem Fahrzeugaufbau verbunden ist und an einem freien hinteren Endabschnitt (27) den aufbauseitigen Anlenkpunkt für den Panhardstab (20) ausbildet.

2. Hinterachse nach Anspruch 1, **dadurch gekennzeichnet, dass** der Panhardstab (20) an einer Oberseite des freien hinteren Endabschnitts (27) der Längsstrebe (24) angelenkt ist.

3. Hinterachse nach Anspruch 1 oder 2, **dadurch gekennzeichnet, dass** eine Querstrebe (25) vorgesehen ist, die sich im wesentlichen in Fahrzeugquerrichtung erstreckt, mit einem ersten Endabschnitt (30) mit dem Fahrzeugaufbau verbunden ist und mit einem weiteren, freien Endabschnitt (31) mit dem aufbauseitigen Ende (22) des Panhardstab (20) und/oder dem freien Endabschnitt (27) der Längsstrebe (24) gekoppelt ist.

4. Hinterachse nach Anspruch 3, **dadurch gekennzeichnet, dass** der Panhardstab (20) an einer Unterseite des freien Endabschnitts (31) der Querstrebe (25) angelenkt ist.

5. Hinterachse nach einem der Ansprüche 1 bis 4, **dadurch gekennzeichnet, dass** der Panhardstab (20) über ein Gelenk (28) mit einer stehenden Lagerachse (B) aufbauseitig angelenkt ist.

6. Hinterachse nach Anspruch 5, **dadurch gekennzeichnet, dass** die Längsstrebe (24) und die Querstrebe (25) einen Lagerzapfen des aufbauseitigen Panhardstabgelenks (28) abstützen.

7. Hinterachse nach einem der Ansprüche 1 bis 6, **dadurch gekennzeichnet, dass** der aufbauseitigen Anlenkpunkt des Panhardstabs (20) bezogen auf die Fahrzeuglängsrichtung zwischen einander gegenüberliegenden, an den Längslenkern (7) und/oder dem Querträger (8) befestigten Radträgern (17) angeordnet ist.

8. Hinterachse nach einem der Ansprüche 1 bis 7, **dadurch gekennzeichnet, dass** der aufbauseitigen Anlenkpunkt des Panhardstabs (20) bezogen auf die Fahrzeughochrichtung zwischen einander gegenüberliegenden, an den Längslenkern (7) und/oder dem Querträger (8) befestigten Radträgern (17) angeordnet ist.

9. Hinterachse nach einem der Ansprüche 3 bis 8, **dadurch gekennzeichnet, dass** die Querstrebe (25) zwischen ihren Endabschnitten (30, 31) einen bezogen auf die Fahrzeughochrichtung nach unten abgesetzten Mittelabschnitt (32) aufweist.

10. Hinterachse nach einem der Ansprüche 1 bis 9, **dadurch gekennzeichnet, dass** der Querträger (8) zwischen den Längslenkern (7) einen Mittelabschnitt (14) mit einer bezogen auf die Fahrzeughochrichtung nach unten abgesetzten Oberkante aufweist.

11. Hinterachse nach einem der Ansprüche 1 bis 10, **dadurch gekennzeichnet, dass** der Querträger (8) ein U-Profil mit zwei Seitenwangen (9, 10) und einem Verbindungssteg (11) aufweist, wobei die Seitenwangen (9, 10) im Mittelabschnitt (14) eine verringerte Höhe aufweisen.

12. Hinterachse nach Anspruch 11, **dadurch gekennzeichnet, dass** die Unterkanten (12, 13) der Seitenwangen (9, 10) des Querträgers (8) in einer horizontalen Ebene liegen, wenn sich die Achse in einer oberen Endanschlagstellung befindet.

13. Hinterachse nach einem der Ansprüche 1 bis 12, **dadurch gekennzeichnet, dass** jeweils ein Radträger (17) an einem Längslenker (7) befestigt ist und jeweils zwischen einem Radträger (17) und einem Längslenker (7) eine Lageraufnahme (19) für einen Schwingungsdämpfer (6) gebildet wird.

14. Hinterachse nach Anspruch 13, **dadurch gekennzeichnet, dass** ein Achszapfen (18) an dem Radträger (17) befestigt ist.

15. Hinterachse nach Anspruch 14, **dadurch gekennzeichnet, dass** der Achszapfen (18) durch Reibschweißen befestigt ist.

16. Verfahren zur Herstellung einer Hinterachse nach Anspruch 14 oder 15, **dadurch gekennzeichnet, dass** zunächst ein Achskörper (2) aus den Längslenkern (7), dem Querträger (8) und den Radträger (17) zusammengefügt wird und anschließend die Achszapfen (18) an dem so gebildeten Achskörper (2) ausgerichtet und an den Radträgern(17) befestigt werden.

## Claims

1. Rear axle for a motor vehicle, comprising:
two trailing arms (7) which are both linked pivotably to a vehicle body,
a crossmember (8) which connects the trailing arms (7) to each other in the transverse direction of the vehicle and is in-each case coupled rigidly to the trailing arms (7), and
a Panhard rod (20) which extends substantially in the transverse direction of the vehicle and is linked by one end (21) to a trailing arm (7) or to the crossmember (8) and by a further end (22) to a body-side link point,
**characterized by** a longitudinal strut (24) which extends substantially in the longitudinal direction of the vehicle, is connected rigidly by a front end section (26) to the vehicle body and, at a free rear end section (27), forms the body-side link point for the Panhard rod (20).

2. Rear axle according to Claim 1, **characterized in that** the Panhard rod (20) is linked to an upper side of the free rear end section (27) of the longitudinal strut (24).

3. Rear axle according to Claim 1 or 2, **characterized in that** a transverse strut (25) is provided, said transverse strut extending substantially in the transverse direction of the vehicle, being connected by a first end section (30) to the vehicle body and being coupled by a further, free end section (31) to the body-side end (22) of the Panhard rod (20) and/or to the free end section (27) of the longitudinal strut (24).

4. Rear axle according to Claim 3, **characterized in that** the Panhard rod (20) is linked to a lower side of the free end section (31) of the transverse strut (25).

5. Rear axle according to one of Claims 1 to 4, **characterized in that** the Panhard rod (20) is linked on the body side via a joint (28) having a vertical bearing axis (B).

6. Rear axle according to Claim 5, **characterized in that** the longitudinal strut (24) and the transverse strut (25) support a journal of the body-side Panhardrod joint (28).

7. Rear axle according to one of Claims 1 to 6, **characterized in that** the body-side link point of the Panhard rod (20) is arranged, with respect to the longitudinal direction of the vehicle, between mutually opposite wheel carriers (17) fastened to the trailing arms (7) and/or to the crossmember (8).

8. Rear axle according to one of Claims 1 to 7, **characterized in that** the body-side link point of the Panhard rod (20) is arranged, with respect to the vertical direction of the vehicle, between mutually opposite wheel carriers (17) fastened to the trailing arms (7) and/or to the crossmember (8).

9. Rear axle according to one of Claims 3 to 8, **characterized in that** the transverse strut (25) has, between the end sections (30, 31) thereof, a central section (32) which is offset downwards with respect to the vertical direction of the vehicle.

10. Rear axle according to one of Claims 1 to 9, **characterized in that** the crossmember (8) has, between the trailing arms (7), a central section (14) having an upper edge which is offset downwards with respect to the vertical direction of the vehicle.

11. Rear axle according to one of Claims 1 to 10, **characterized in that** the crossmember (8) has a U profile with two side members (9, 10) and a connecting web (11), wherein the side members (9, 10) have a reduced height in the central section (14).

12. Rear axle according to Claim 11, **characterized in that** the lower edges (12, 13) of the side members (9, 10) of the crossmember (8) lie in a horizontal plane when the axle is in an upper end stop position.

13. Rear axle according to one of Claims 1 to 12, **characterized in that** in each case one wheel carrier (17) is fastened to a trailing arm (7), and a bearing receptacle (19) for a vibration damper (6) is formed in each case between a wheel carrier (17) and a trailing arm (7).

14. Rear axle according to Claim 13, **characterized in that** an axle stub (18) is fastened to the wheel carrier (17).

15. Rear axle according to Claim 14, **characterized in that** the axle stub (18) is fastened by friction welding.

16. Method for producing a rear axle according to Claim 14 or 15, **characterized in that** first of all an axle body (2) consisting of the trailing arms (7), the crossmember (8) and the wheel carrier (17) is assembled, and then the axle stubs (18) are aligned on the axle body (2) formed in this manner and are fastened to the wheel carriers (17).

## Revendications

1. Essieu arrière pour un véhicule automobile, comprenant :
deux bras oscillants longitudinaux (7) qui sont à chaque fois articulés de manière pivotante à une carrosserie du véhicule,
une traverse (8) qui relie l'un à l'autre les bras oscillants longitudinaux (7) dans la direction transversale du véhicule et qui est à chaque fois accouplée rigidement aux bras oscillants longitudinaux (7), et
une barre Panhard (20) s'étendant essentiellement dans la direction transversale du véhicule, laquelle est articulée par une extrémité (21) à un bras oscillant longitudinal (7) ou à la traverse (8) et par une autre extrémité (22) à un point d'articulation du côté de la carrosserie,
**caractérisé par**
un montant longitudinal (24) s'étendant essentiellement dans la direction longitudinale du véhicule, lequel est connecté rigidement à la carrosserie du véhicule par une section d'extrémité avant (26) et constitue au niveau d'une section d'extrémité arrière libre (27) le point d'articulation du côté de la carrosserie pour la barre Panhard (20).

2. Essieu arrière selon la revendication 1, **caractérisé en ce que** la barre Panhard (20) est articulée à un côté supérieur de la section d'extrémité arrière libre (27) du montant longitudinal (24).

3. Essieu arrière selon la revendication 1 ou 2, **caractérisé en ce qu'**un montant transversal (25) est prévu, lequel s'étend essentiellement dans la direction transversale du véhicule, est connecté par une première section d'extrémité (30) à la carrosserie du véhicule, et est accouplé par une autre section d'extrémité libre (31) à l'extrémité (22) de la barre Panhard (20) du côté de la carrosserie et/ou à la section d'extrémité libre (27) du montant longitudinal (24).

4. Essieu arrière selon la revendication 3, **caractérisé en ce que** la barre Panhard (20) est articulée à un côté inférieur de la section d'extrémité libre (31) du montant transversal (25).

5. Essieu arrière selon l'une quelconque des revendications 1 à 4, **caractérisé en ce que** la barre Panhard (20) est articulée du côté de la carrosserie par le biais d'une articulation (28) à un axe de palier fixe (B).

6. Essieu arrière selon la revendication 5, **caractérisé en ce que** le montant longitudinal (24) et le montant transversal (25) supportent un tourillon de palier de l'articulation de la barre Panhard (28) du côté de la carrosserie.

7. Essieu arrière selon l'une quelconque des revendications 1 à 6, **caractérisé en ce que** le point d'articulation de la barre Panhard (20) du côté de la carrosserie est disposé, par rapport à la direction longitudinale du véhicule, entre des supports de roue (17) opposés l'un à l'autre, fixés aux bras oscillants longitudinaux (7) et/ou à la traverse (8).

8. Essieu arrière selon l'une quelconque des revendications 1 à 7, **caractérisé en ce que** le point d'articulation de la barre Panhard (20) du côté de la carrosserie est disposé, par rapport à la direction verticale du véhicule, entre des supports de roue (17) opposés l'un à l'autre, fixés aux bras oscillants longitudinaux (7) et/ou à la traverse (8).

9. Essieu arrière selon l'une quelconque des revendications 3 à 8, **caractérisé en ce que** le montant transversal (25) présente entre ses sections d'extrémité (30, 31) une section centrale (32) décalée vers le bas par rapport à la direction verticale du véhicule.

10. Essieu arrière selon l'une quelconque des revendications 1 à 9, **caractérisé en ce que** la traverse (8) présente, entre les bras oscillants longitudinaux (7), une section centrale (14) avec une arête supérieure décalée vers le bas par rapport à la direction verticale du véhicule.

11. Essieu arrière selon l'une quelconque des revendications 1 à 10, **caractérisé en ce que** la traverse (8) présente un profilé en U avec deux parois latérales (9, 10) et une âme de connexion (11), les parois latérales (9, 10) présentant, dans la section centrale (14), une hauteur réduite.

12. Essieu arrière selon la revendication 11, **caractérisé en ce que** les arêtes inférieures (12, 13) des parois latérales (9, 10) de la traverse (8) se situent dans un plan horizontal lorsque l'essieu se trouve dans une position de butée de fin de course supérieure.

13. Essieu arrière selon l'une quelconque des revendications 1 à 12, **caractérisé en ce qu'**un support de roue (17) est à chaque fois fixé sur un bras oscillant longitudinal (7) et un logement de palier (19) pour un amortisseur de vibrations (6) est formé à chaque fois entre un support de roue (17) et un bras oscillant longitudinal (7).

14. Essieu arrière selon la revendication 13, **caractérisé en ce qu'**un tourillon d'axe (18) est fixé sur le support de roue (17).

15. Essieu arrière selon la revendication 14, **caractérisé en ce que** le tourillon d'axe (18) est fixé par soudage par friction.

16. Procédé de fabrication d'un essieu arrière selon la revendication 14 ou 15, **caractérisé en ce qu'**un corps d'essieu (2) constitué des bras oscillants longitudinaux (7), de la traverse (8) et des supports de roue (17) est d'abord assemblé puis les tourillons d'axe (18) sont orientés sur le corps d'essieu (2) ainsi formé et sont fixés aux supports de roue (17).
